# EUROPÄISCHE PATENTSCHRIFT

(11) **EP 0 432 427 B1**
(45) Veröffentlichungstag und Bekanntmachung des Hinweises auf die Patenterteilung: **01.09.1993**
(21) Anmeldenummer: 90120684.7
(22) Anmeldetag: 29.10.1990
(51) Int. Cl.: B29B 9/06

(54) **Verfahren zum Anfahren einer Unterwassergranuliereinrichtung und Vorrichtung zur Unterwassergranulierung**
Underwater granulator and method of starting it
Dispositif de granulation sous l'eau et procédé pour le démarrer

(30) Priorität: 15.12.1989 DE 3941418
(43) Veröffentlichungstag der Anmeldung: 19.06.1991
(73) Patentinhaber: Werner & Pfleiderer GmbH, 70469 Stuttgart (DE)
(72) Erfinder: Grimminger, Albert, Dipl.-Ing., W-7250 Leonberg 7 (DE)

(56) Entgegenhaltungen:
- EP-A- 0 246 921
- DE-A- 1 937 862
- US-A- 4 461 737

## Beschreibung

Die Erfindung betrifft ein Verfahren zum Anfahren einer Unterwassergranuliereinrichtung für thermoplastische Kunststoffe nach den Merkmalen des Oberbegriffes des Anspruches 1, sowie eine Vorrichtung nach den Merkmalen des Oberbegriffes des Anspruches 4.

Die Unterwassergranulierung hat sich besonders bei der Granulierung von thermoplastischen Kunststoffen bewährt und wird weltweit bei der industriellen Herstellung von Kunststoffgranulat (z.B. DE-OS 26 46 309) eingesetzt. Hierbei tritt die von einem Extruder kommende heiße Kunststoffschmelze durch die Düsen einer Lochplatte direkt in das Wasserbad einer gefluteten Granulierhaube ein. Die durch eine Schneideinrichtung an der Lochplatte abgeschnittenen Granulatkörner werden mit dem Kühlwasser oben aus der Granulierhaube ausgeschwemmt und in einer Nachbehandlungsstrecke getrocknet.
Die Inbetriebnahme derartiger Einrichtungen bereitet oft Schwierigkeiten, da beim Anfahren, d.h. beim Eintritt des Kühlwassers in die Granulierhaube (Flutung) ein Teil der Schmelzeaustrittsdüsen der Lochplatte durch Einfrieren der Schmelze teilweise oder ganz verstopfen, da in dieser Phase der Schmelze-Düsen-Durchsatz noch sehr gering ist und somit noch die Heizleistung der fließenden heißen Schmelze fehlt.
Zur Linderung dieses Mangels ist es aus der DE-OS 19 37 862 bekannt, zwischen Extruder und Lochplatte ein Anfahrventil anzuordnen, um das Anfahrprodukt für eine nach den jeweiligen Umständen bestimmbare Zeitdauer aus dem Extruder ins Freie zu leiten. Der Einsatz eines Anfahrventils bringt zwar eine Verbesserung des Anfahrvorganges durch eine ausreichend erwärmte Kunststoffschmelze in der Lochplatte, aber damit kann das Einfrieren von einzelnen Schmelzeaustrittsdüsen aufgrund der schlagartigen Wasserzuschaltung (Flutung) nicht ganz vermieden werden.
Neben der Unterwassergranulierung ist auch die Wasserringgranulierung (z.B. DE-PS 14 54 888) bekannt, bei der die Schneideinrichtung von einer Granulat-Fang- und Kühlhaube umschlossen ist und das Granulat von dem Schneidwerkzeug in den Wasserring, der sich an der Haubeninnenwand bildet, geschleudert wird. Die Wasserringgranulierung ist nicht für alle Thermoplasttypen einsetzbar, insbesondere nicht für solche, die zum Schmieren an der Lochplatte und zum Kleben an den Messern der Schneideinrichtung neigen.

Der Erfindung liegt die Aufgabe zugrunde die Unterwassergranulierung für thermoplastische Kunststoffe so auszugestalten, daß ein Verstopfen der Schmelzeaustrittsdüsen beim Anfahren durch Einfrieren von Schmelze in den Düsen der Lochplatte vermieden wird.

Die Aufgabe wird bei einem Verfahren mit den Merkmalen des Patentanspruches 1 gelöst.
weiterhin wird die Aufgabe durch eine Vorrichtung nach den Merkmalen des Patentanspruches 4 gelöst.
Durch die erfindungsgemäße Lösung wird ein Verstopfen der Düsen in der Lochplatte durch Einfrieren der Schmelze beim Anfahren einer Unterwassergranuliereinrichtung mit Sicherheit vermieden, da erst nach Erreichung des Schmelzesolldurchsatzes die Flutung der Granulierhaube und somit der Übergang zur Unterwassergranulierung beginnt.
Entsprechend der Ausgestaltung der Erfindung nach den Merkmalen des Anspruches 2, wird der Übergang (Flutung) vom Anfahr- zum Dauerbetrieb durch Rückstau des Wasser-Granulatstromes in der Nachbehandlungsstrecke durch den dort höher angeordneten Trockner nach Umschaltung der Anfahrweiche erreicht.
Eine schnellere Flutung der Granulierhaube kann nach der Ausgestaltung des Merkmales 3 erfolgen.

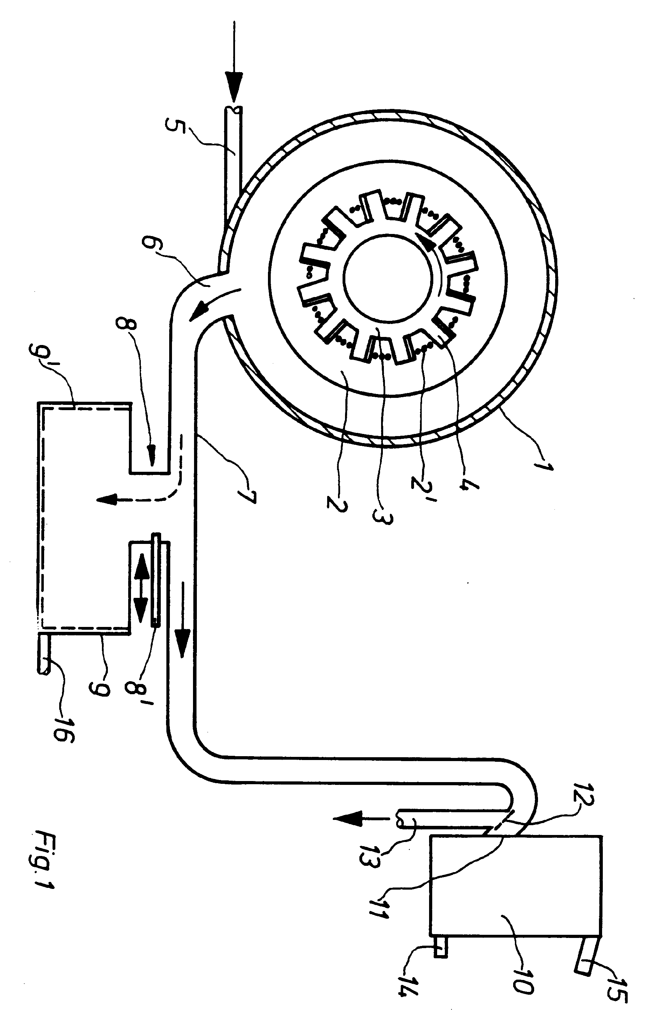

Die Erfindung wird durch ein Ausführungsbeispiel an Hand der Zeichnung erläutert. Hierbei zeigt
- Fig. 1: eine Granulierhaube mit Schneideinrichtung im Querschnitt dargestellt mit schematisch abgebildeter Nachbehandlungsstrecke
- Fig. 2: die am Schmelzeaustritt eines Extruders angeschlossene Unterwassergranuliereinrichtung im Längsschnitt mit angedeutetem Wasserring in der Anfahrphase
- Fig. 3: die Darstellung gemäß Fig. 2 nach der Flutung der Granulierhaube (Dauerbetrieb).

Die Kunststoffschmelze wird in einem nicht näher dargestellten Extruder 18 aufbereitet.
Eine mit Düsen 2' versehene Lochplatte 2 ist an dem Extruder 18 angeschraubt. Der Lochplatte 2 ist die mit mehreren Schneidflügeln 4 ausgerüstete Schneideinrichtung 3, die über die Welle 17 antreibbar ist, zugeordnet. Durch die Granulierhaube 1 ist die Schneideinrichtung 3 ringförmig umschlossen. Der Kühlwasserzufluß 5 ist im unteren Bereich der Granulierhaube 1 eingebunden. Mit 6 ist der Wasser-Granulat-Abfluß bezeichnet. Dieser steht mit der Leitung 7 der Nachbehandlungsstrecke in Verbindung. Durch den Schieber 8' kann die Anfahrweiche 8 geöffnet oder geschlossen werden. Der Anfahrweiche 8 ist ein mit einem Siebeinsatz 9' versehener Anfahrbehälter 9 zugeordnet. Der Trockner 10 ist höher gestellt, so daß der mit der Leitung 7 verbundene Trocknereinlaß 11 wenigstens dem höchst möglichen Wasserstandsniveau in der Granulierhaube 1 entspricht. Vor dem Trocknereinlaß 11 ist ein mit einem Abfluß 13 versehenes Sieb 12 für die Vorentwässerung in der Leitung 7 angeordnet.

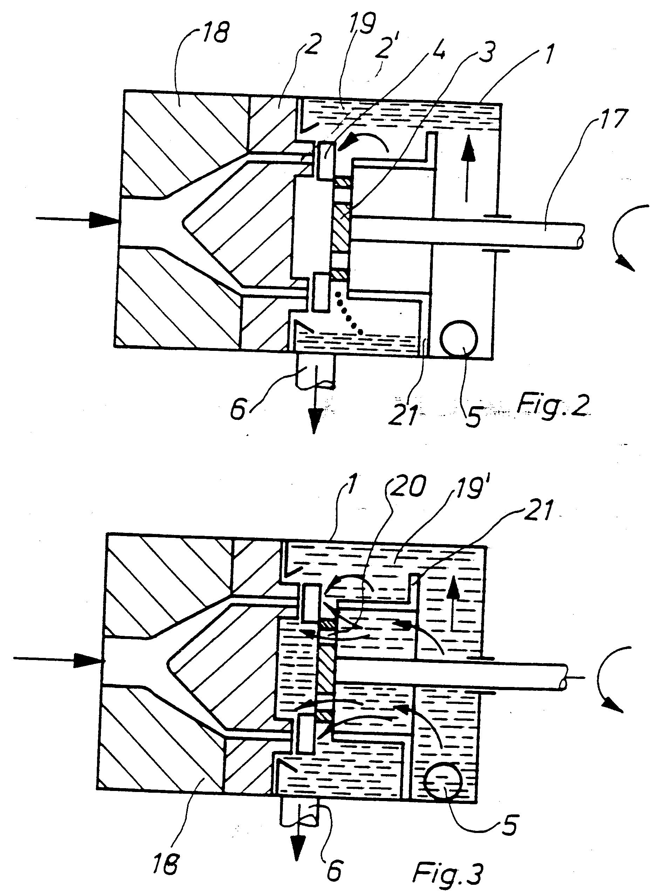

Der Trockner 10 ist mit einem Wasserabfluß 14 und mit einem Auslaß 15 für das Trockengranulat ausgerüstet. Der in der Anfahrphase ringförmig an der Innenwand der Granulierhaube 1 ausgebildete Wasserring 19 ist aus Fig. 2 ersichtlich.
Die Fig. 3 stellt den Dauerbetrieb (Unterwassergranulierung) mit gefluteter Granulierhaube 1 dar. Der Wasserstand ist hierbei mit 19' bezeichnet. Zum Zwecke der besseren Kühlung der Schneidflügel 4 mit granulatfreiem Kühlwasser sind Bohrungen 20 in der Schneideinrichtung 3 angeordnet. Die Zuleitung des Kühlwassers zu den Bohrungen 20 übernimmt eine die Schneideinrichtung 3 in Achsrichtung zylinderförmig umschließende Manschette 21.
Die Verfahrenschritte beim Starten können der nachfolgend beschriebenen Wirkungsweise der Vorrichtung entnommen werden.
Beim Starten der Unterwassergranuliereinrichtung ist der Schieber 8' der Anfahrweiche 8 geöffnet, so daß am Anfang der Wasser-Granulatstrom in den Anfahrbehälter 9 geleitet wird. Da dieser unter dem Niveau des Wasser-Granulat-Abflußes 6 liegt und mit einem Wasserabfluß 16 versehen ist, erfolgt kein Rückstau und die Unterwassergranuliereinrichtung arbeitet die erste Zeit als Wasserringgranuliereinrichtung, d.h. das Anfangs das mit hohem Druck über den Kühlwasserzufluß 5 eintretende Kühlwasser an der Innenwand der Granulierhaube 1 einen Wasserring 19 ausbildet. Dabei wird die Lochplatte 2 und Schneideinrichtung 3 durch diesen Wasserring 19 nicht gekühlt. Erst wenn der Schmelzesolldurchsatz in allen Düsen 2' gesichert ist, wird der Schieber 8' geschlossen, so daß durch den nun eintretenden Rückstau die Granulierhaube 1 mit Wasser geflutet wird. Nach erfolgter Flutung wird die Kühlwasserzufuhr dem Bedarf der Unterwassergranulierfahrweise angepaßt.

Durch die erfindungsgemäßen Maßnahmen wird auf einfacher Weise durch das Betreiben der Granulierhaube 1 in der Anfahrphase als Wasserringgranuliereinrichtung und der Umschaltung auf Unterwassergranulierung erst nach Erreichung eines ausreichenden Schmelzedurchsatzes das Einfrieren der Düsen 2' vermieden. Dabei kann gleichzeitig auf ein Anfahrventil verzichtet werden. Für die Erzielung des Rückstaues ist nicht unbedingt die Erhöhung des Trockners erforderlich, dies kann auch über eine entsprechend höher verlegte Leitungsschleife der Leitung 7 erreicht werden. Durch einen zusätzlichen Kühlwasserzufluß zur Granulierhaube 1 (in der Zeichnung nicht näher dargestellt) kann die Flutung der Granulierhaube erheblich beschleunigt werden.

## Patentansprüche

1. Verfahren zur Unterwassergranulierung von geschmolzenen thermoplastische Kunststoffen, wobei die Schmelze aus einer kontinuierlichen Aufbereitungsvorrichtung (Extruder) durch die Düsen einer Lochplatte direkt in ein flüssiges Kühlmittel gepreßt und dort mittels einer der Lochplatte zugeordneten und von einer mit einer Granulierhaube umgebenen Schneideinrichtung zu Granulat geschnitten wird, wobei das Kühlmittel-Granulat-Gemisch einer Nachbehandlungsstrecke zugeführt wird, dadurch gekennzeichnet, daß in der Anfahrphase die Kühlwasserzuführung so erfolgt, daß sich an der Innenwand der Granulierhaube ein Wasserring ausbildet, wobei das dabei entstehende Anfahrgranulat-Wassergemisch über eine am Anfang der Nachbehandlungsstrecke vorhandene Anfahrweiche einem Anfahrbehälter zugeleitet wird und daß nach Erreichen eines ausreichend hohen Schmelzedurchsatzes in den Düsen der Lochplatte durch Umschaltung der Anfahrweiche und Rückstau des Kühlwasser-Granulat-Gemisches die Flutung der Granulierhaube erfolgt und das Kühlwasser-Granulat-Gemisch in bekannter Weise die Nachbehandlungsstrecke durchläuft.

2. Verfahren nach Anspruch 1, dadurch gekennzeichnet, daß der Rückstau des Kühlwasser-Granulat-Gemisches durch den gegenüber dem Wasser-Granulat-Abfluß (6) in einer höheren Ebene angeordneten Trockner (10) oder Leitungsschleife erfolgt.

3. Verfahren nach den Ansprüchen 1 und 2, dadurch gekennzeichnet, daß zum Zwecke der Flutung ein zweiter Kühlwasserstrom in die Granulierhaube (1) eingeleitet wird.

4. Vorrichtung zur Unterwassergranulierung für thermoplastische Kunststoffe mit einer der Lochplatte vorgeordneten, antreibbaren und von einer Granulierhaube umschlossenen Schneideinrichtung, wobei die Granulierhaube mit einem Kühlwasserzufluß und einem Wasser-Granulat-Abfluß versehen ist, dadurch gekennzeichnet, daß der Kühlwasserzufluß (5) und der Wasser-Granulat-Abfluß (6) im unteren Bereich der Granulierhaube (1) tangential angeordnet sind, wobei in einer aus Anfahrweiche (8), Vorentwässerung (12) und Trockner (10) bestehenden Nachbehandlungsstrecke der Trocknereingang (11) innerhalb eines Höhenbereiches angeordnet ist der wenigstens dem höchstmöglichsten Wasserstandsniveau der Granulierhaube (1) entspricht wobei die Anfahrweiche (8) im Höhenbereich des Wasser-Granulat-Abflußes (6) angeordnet ist.

## Claims

1. Method for the underwater granulation of molten thermoplastic synthetic materials, wherein the melt is pressed out of a continuous preparing device (extruder) through the nozzles of a perforated plate directly into a liquid coolant and cut into granulate there by means of a cutting equipment which is associated with the perforated plate and surrounded by a granulating hood, wherein the mixture of coolant and granulate is fed to a retreatment section, characterised thereby, that the cooling water feed so takes place during the starting-up phase that a water ring is formed at the inward wall of the granulating hood, wherein the thus arising mixture of water and starting-up granulate is fed to a starting-up container by way of a starting-up shunting switch present at the beginning of the retreatment section and that, after reaching an adequately high throughput of melt in the nozzles of the perforated plate, the flooding of the granulating hood takes place through switching over of the starting-up shunting switch and build-up of the mixture of cooling water and granulate and the mixture of cooling water and granulate flows in known manner through the retreatment section.

2. Method according to claim 1, characterised thereby, that the build-up of the mixture of cooling water and granulate takes place through the drier (10) or duct loop arranged in a higher plane relative to the water-granulate outlet (6).

3. Method according to the claims 1 and 2, characterised thereby, that a second cooling water current is led into the granulating hood (1) for the purpose of the flooding.

4. Device, for the underwater granulation for thermoplastic synthetic materials, with a drivable cutting equipment which is arranged upstream of the perforated plate and enclosed by a granulating hord, wherein the granulating hood is provided with a cooling water inlet and a water-granulate outlet, characterised thereby, that the cooling water inlet (5) and the water-granulate outlet (6) are arranged tangentially in the lower region of the granulating hood (1), wherein the drier entry (11) is arranged in a retreatment section, which consists of starting-up shunting switch, preliminary water removal (12) and drier (10), within a height range which corresponds to at least the highest possible water level of the granulating hodd (1),wherein the starting-up shunting switch (8) is arranged in the height range of the water-granulate outlet (6).

## Revendications

1. Procédé de granulation immergée de matières thermoplastiques fondues, dans lequel la masse en fusion est directement comprimée dans un agent liquide de refroidissement à la sortie d'un dispositif de préparation en continu (extrudeuse), à travers les ajutages d'une plaque perforée, pour y être sectionnée en du granulat au moyen d'un dispositif de coupe associé à la plaque perforée, et entouré par une hotte de granulation, le mélange agent de refroidissement-granulat étant délivré à un trajet de post-traitement, caractérisé par le fait que, durant la phase d'amorçage, l'amenée d'eau de refroidissement a lieu de telle sorte qu'un anneau d'eau se forme sur la paroi interne de la hotte de granulation, le mélange d'eau et de granulat de départ, qui est alors engendré, étant dirigé vers un réceptacle d'entrée par l'intermédiaire d'un aiguillage d'entrée présent au début du trajet de post-traitement ; et par le fait que, après qu'un débit de masse en fusion suffisamment grand a été atteint dans les ajutages de la plaque perforée, la mise en eau de la hotte de granulation s'opère par commutation de l'aiguillage d'entrée et par retenue du mélange eau de refroidissement-granulat, et le mélange eau de refroidissement-granulat parcourt de manière connue le trajet de post-traitement.

2. Procédé selon la revendication 1, caractérisé par le fait que la retenue du mélange eau de refroidissement-granulat s'opère par l'intermédiaire du sécheur (10) ou de la boucle de conduit situé(e) dans un plan supérieur par rapport à l'évacuation (6) de l'eau et du granulat.

3. Procédé selon les revendications 1 et 3, caractérisé par le fait qu'un second flux d'eau de refroidissement est introduit dans la hotte de granulation (1) en vue de la mise en eau.

4. Dispositif de granulation immergée de matières thermoplastiques, présentant un dispositif de coupe installé en amont de la plaque perforée, pouvant être entraîné et entouré par une hotte de granulation, la hotte de granulation étant pourvue d'une arrivée d'eau de refroidissement et d'une évacuation de l'eau et du granulat, caractérisé par le fait que l'arrivée (5) d'eau de refroidissement et l'évacuation (6) de l'eau et du granulat sont agencées tangentiellement dans la région inférieure de la hotte de granulation (1), dispositif dans lequel, sur un trajet de post-traitement comprenant un aiguillage d'entrée (8), un système de déshydratation préalable (12) et un sécheur (10), l'entrée (11) du sécheur est située dans les limites d'une zone en hauteur qui correspond au moins au niveau d'eau maximal possible de la hotte de granulation (1), l'aiguillage d'entrée (8) étant disposé verticalement dans la région de l'évacuation (6) de l'eau et du granulat.
